# EUROPÄISCHE PATENTANMELDUNG

(11) **EP 1 890 376 A2**
(43) Veröffentlichungstag der Anmeldung: **20.02.2008**
(21) Anmeldenummer: 07008998.2
(22) Anmeldetag: 04.05.2007
(51) Int. Cl.: H02P 6/00, H02K 19/04

(54) **Verfahren zum Betrieb eines Synchronmotors mit geschalteten Elektromagneten sowie Synchronmotor mit geschalteten Elektromagneten**

(30) Priorität: 05.05.2006 CH 7282006
(71) Anmelder: Parras, Karl-Heinz, 91126 Schwabach (DE)
(72) Erfinder: Jäger, Alois, 78050 VS-Villingen (DE); Parras, Karl-Heinz, 91126 Schwabach (DE)

(57) **Zusammenfassung**

Um den Wirkungsgrad eines elektrischen Synchronmotors mit geschalteten Elektromagneten, mit einem Stator, aufgebaut aus mindestens einem Statorelektromagneten (MS1 - MS4), und mit einem Rotor, aufgebaut aus mindestens einem Rotorelektromagneten (MR1 - MR4), erheblich zu verbessern, sind die Windungszahlen der Wicklungen auf den Statorelektromagneten (SM1 -SM4) mindestens annähernd, vorzugsweise genau gleich den Windungszahlen der Wicklungen auf den Rotorelektromagneten (RM1 - RM4) gewählt, ist aber der auf den durch Rotor und Stator gebildeten magnetischen Kreis bezogene Wicklungssinn der Wicklungen der Statorelektromagnete (SM1 -SM2) entgegengesetzt zum Wicklungssinn der Wicklungen der Rototelektromagnete (RM1 - RM2) gewählt. Die Stator- und Rotorelektromagnete (SM1 - SM4, RM1 - RM4) sind in Reihe geschaltet. Weil aufgrund der gleichen Windungszahlen, aber gegensinning gepolten Wicklungen der Magnete (RM1 - RM2, SM1 - SM2) keine Gegen-EMK generiert wird, läßt sich ein sehr guter Wirkungsgrad des erfindungsgemäßen Synchronmotors erzielen. Wenn sich die Polschuhe der Magnete (RM1 - RM2, SM1 - SM2) bei laufendem Motor weiter voneinander entfernen, steigt die resultierende Induktivität sprunghaft auf die Summe der Einzelinduktivitäten der Rotor- und Statormagnete (RM1 - RM2, SM1 - SM2) an. Zu diesem Zeitpunkt wird die Bestromung der Magnete (RM1 - RM2, SM1 - SM2) beendet. Anschließend kann beispielsweise mittels einer geeigneten Schaltungsanordnung die zum Abschaltzeitpunkt in den Spuleninduktivitäten gespeicherte elektrische Energie in die Speisespannungsquelle zurück geladen werden, um eine weitere Verbesserung des Wirkungsgrades zu erzielen. Der Synchronmotor kann z. B. auch als Linearmotor oder mit einem die Funktion des Rotors ausführenden Pendel ausgebildet sein.

## Beschreibung

Die Erfindung betrifft ein Verfahren zum Betrieb eines elektrischen Synchronmotors mit geschalteten Elektromagneten, mit einem Stator, aufgebaut aus mindestens einem Statorelektromagneten, und mit einem Rotor, aufgebaut aus mindestens einem Rotorelektromagneten.

Die Erfindung betrifft ferner einen elektrischen Synchronmotor mit geschalteten Elektromagneten, mit einem Stator, aufgebaut aus mindestens einem Statorelektromagneten, und mit einem Rotor, aufgebaut aus mindestens einem Rotorelektromagneten.

Elektrische Motoren unterschiedlichster Art sind heute Grundlage aller industriellen Fertigung und kommen in allen Lebensbereichen millionenfach zum Einsatz. Viele Anstrengungen sind unternommen worden, den Wirkungsgrad dieser elektrischen Antriebe kontinuierlich zu verbessern und die Konstruktions- und Herstellungsverfahren in Richtung geringerer Kosten zu optimieren. Ein ganz wesentlicher Aspekt moderner Motorentwicklung ist zudem die Verbesserung der Regeldynamik. Als Beispiel seien hier nur genannt die bürstenlosen Gleichstrommotoren (engl. BLDC Motor) mit elektronischer Kommutierung.

Es ist daher Aufgabe der Erfindung, den Wirkungsgrad eines elektrischen Synchronmotors erheblich zu verbessern.

Verfahrensmäßig wird diese Aufgabe mit den im Anspruch 1 angegeben Merkmalen dadurch gelöst, daß die Windungszahlen der Wicklungen auf den Statorelektromagneten mindestens annähernd gleich den Windungszahlen der Wicklungen auf den Rotorelektromagneten gewählt werden, daß aber der auf den durch beide Magnete gebildeten magnetischen Kreis bezogene Wicklungssinn der Wicklungen der Statorelektromagnete entgegengesetzt zum Wicklungssinn der Wicklungen der Rotorelektromagnete gewählt wird und daß die Stator- und Rotorelektromagnete in Reihe geschaltet werden.

Vorrichtungsmäßig wird diese Aufgabe mit den im Anspruch 1 angegeben Merkmalen dadurch gelöst, daß die Windungszahlen der Wicklungen auf den Statorelektromagneten mindestens annähernd gleich den Windungszahlen der Wicklungen auf den Rotorelektromagneten gewählt sind, daß aber der auf den durch beide Magnete gebildeten magnetischen Kreis bezogene Wicklungssinn der Wicklungen der Statorelektromagnete entgegengesetzt zum Wicklungssinn der Wicklungen der Rotorelektromagnete gewählt ist und daß die Stator- und Rotorelektromagnete in Reihe geschaltet sind.

Die Erfindung geht von der ersten Erkenntnis aus, daß auf einen stromdurchflossenen Leiter im Magnetfeld eine Kraft senkrecht zur Richtung dieses Magnetfeldes einwirkt. Die Erfindung geht weiter von der zweiten Erkenntnis aus, daß gleichzeitig bei jedem bewegten Leiter im Magnetfeld eine Spannung, die Elektromotorische Kraft (EMK) induziert wird, die entsprechend der sog. Lentzschen Regel der antreibenden Motorspannung immer entgegenwirkt und dadurch den Wirkungsgrad aller bisherigen Elektromotoren in nachteiliger Weise verringert.

Diese im Motor während des Betriebs induzierte Spannung wird meist "Gegen-EMK" oder im englischen Sprachgebrauch auch "back emf" genannt. Die Grundlagen und die unterschiedlichsten Konstruktionsprinzipien sind in entsprechenden Fachbüchern dargestellt und sollen hier nicht näher erörtert werden.

Durch die erfindungsgemäßen Maßnahmen, einerseits die Windungszahlen der Wicklungen auf den Statorelektromagneten mindestens annähernd, vorzugsweise genau gleich wie die Windungszahlen der Wicklungen auf den Rotorelektromagneten zu wählen, andererseits aber den auf den durch beide Magnete gebildeten magnetischen Kreis bezogenen Wicklungssinn der Wicklungen des Statorelektromagneten entgegengesetzt zum Wicklungssinn der Wicklungen des Rotorelektromagneten zu wählen sowie die Stator- und Rotorelektromagnete in Reihe zu schalten, wird höchstens nur eine vernachlässigbar kleine, bestenfalls gar keine Gegen-EMK erzeugt.

Weil nur eine vernachlässigbar kleine Gegen-EMK, bestenfalls überhaupt keine Gegen-EMK erzeugt wird, zeichnet sich der erfindungsgemäße Synchronmotor durch einen sehr guten, den theoretisch größtmöglichen Wirkungsgrad aus.

Ausfiihrungsbeispiele und Ausgestaltungen der Erfindung sind in den Unteransprüchen angegeben.

Ein erstes Ausführungsbeispiel der Erfindung sieht vor, zur Steuerung des elektrischen Synchronmotors und somit zur Bestromung der in Reihe geschalteten Spulen der Stator- und Rotorelektromagnete steuerbare Schalter vorzusehen.

Zur weiteren Erhöhung des Wirkungsgrades wird vorzugsweise die in den Spulen der Stator- und Rotorelektromagnete vorhandene Energie durch Rückspeisung in einen Energiespeicher, z. B. einen Kondensator oder einen Akkumulator, gespeichert; während der Bestromung der Stator- und Rotorelektromagnete mittels einer Versorgungsspannungsquelle wird der Energiespeicher z. B. mittels einer Diode vom Speisestromkreis getrennt.
Anstelle mittels eines Energiespeichers läßt sich die in den Spulen gespeicherte Energie auch mittels zweier Dioden und zweier steuerbarer Schalter bzw. eines steuerbaren zweipoligen Schalters in die Versorgungsspannungsquelle zurück speisen.

Die Erfindung wird nun an Hand der Zeichnung näher beschrieben und erläutert.

In der Zeichnung zeigen:
- Fig. 1: Die Darstellung eines Rotor- und eines Statormagneten mit den zugehörigen Wicklungen eines erfindungsgemäßen Ausführungsbeispieles,
- Fig. 2: das Ersatzschaltbild des erfindungsgemäßen Motors,
- Fig. 3: eine schematische Darstellung des Induktivitätsverlaufs bei einem erfindungsgemäßen elektrischen Synchronmotor,
- Fig. 4: eine axiale Ansicht einer abgewickelten Motoranordnung mit 4 Paaren von Elektromagneten eines Ausführungsbeispieles der Erfindung,
- Fig. 5: das Ersatzschaltbild für die Rückspeisung der in den Spulen gespeicherten Energie mittels eines zweiten Energiespeichers,
- Fig. 6: Ersatzschaltbild für die Rückspeisung der in den Spulen gespeicherten Energie ohne einen zweiten Energiespeicher und
- Fig. 7: eine auf der Motorwelle sitzende Kontaktsteuerscheibe oder -walze und
- Fig. 8: eine bevorzugte Schaltungsvariante mit zwei Spannungsquellen und zwei Dioden zur Rückspeisung der in den Spulen gespeicherten Energie.

Die Funktion des erfindungsgemäßen Motors beruht im Wesentlichen auf der abstoßenden Kraft zwischen zwei gleichnamigen magnetischen Polen, in diesem Fall den Polschuhen zweier Elektromagnete mit identischen Windungszahlen.

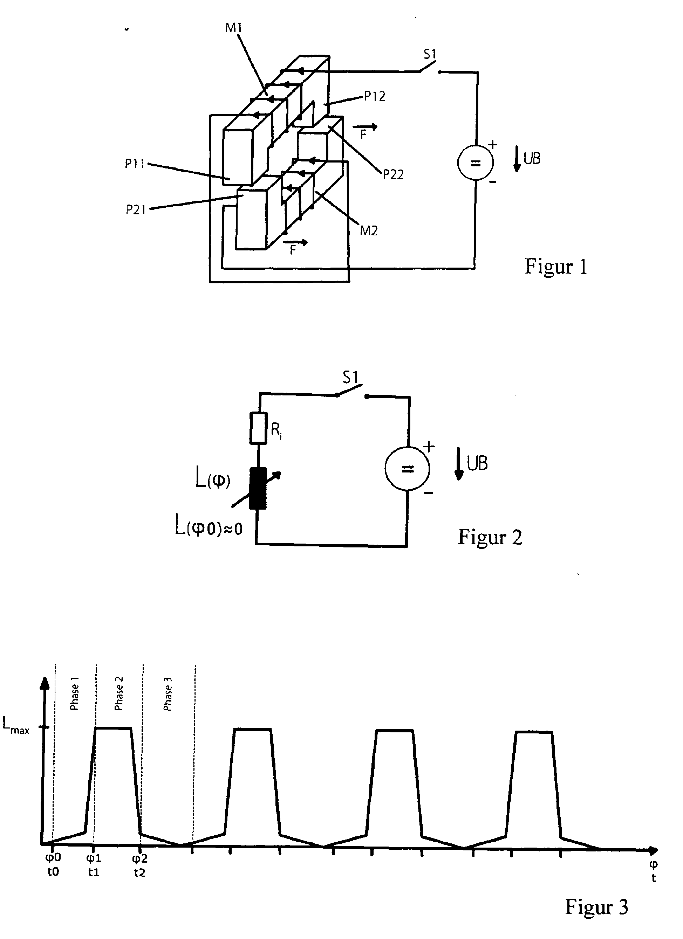

In der Figur 1 sind schematisch zwei Elektromagnete M1 und M2 dargestellt. M1 sei einer von mehreren möglichen Elektromagneten, die mechanisch fest im Stator des Motors untergebracht sind. M2 sei einer von mehreren möglichen Elektromagneten, die an der Peripherie des Rotors angeordnet sind. Aus Gründen besserer Anschaulichkeit sind jeweils nur 4 Windungen der Spulenwicklungen gezeigt, die Pfeile deuten die Stromrichtungen an.

Die Polschuhe P11 und P12 des Statormagneten und die Polschuhe P21 und P22 des Rotormagneten bilden in der dargestellten Position der Bewegungsphase 1 zusammen mit den weichmagnetischen Kernen der Spulen M1 und M2 einen weitgehend geschlossenen magnetischen Kreis. Die Luftspalte zwischen den Polschuhen sollten so klein wie möglich sein, damit der magnetische Widerstand des magnetischen Kreises im Zustand der maximalen Annäherung der beiden Polschuhe so gering wie möglich wird.

Die Magnete M1 und M2 haben identische Windungszahlen n1 und n2, aber bezogen auf den durch sie gebildeten magnetischen Kreis entgegengesetzten Wicklungssinn.

Neben den dargestellten Konstruktionsprinzipien des erfindungsgemäßen Motors ist es ein weiteres kennzeichnendes Merkmal, dass die beiden Magnete M1 und M2 elektrisch in Reihe geschaltet sind.

Während der in der Figur 1 dargestellten Bewegungsphase 1 werden die beiden Spulen für eine bestimmte Zeitdauer mit Strom versorgt, indem sie über einen bevorzugt elektronischen Schalter S 1 mit einer Versorgungsspannungsquelle UB verbunden werden.

Der Einschaltzeitpunkt wird mit t0 bezeichnet, t0 korrespondiert mit dem zugehörigen Rotorwinkel ϕ0. Die Stromrichtung in den beiden Spulen ist so orientiert, dass die sich gegenüber, stehenden Polschuhe P11 und P21 bzw. P12 und P22 jeweils gleichnamige magnetische Polarität aufweisen. Bezogen auf den geschlossenen magnetischen Kreis heißt das, dass die beiden Magnetspulen gegensinnig von Strom durchflossen werden.

Während der in der Figur 1 dargestellten Bewegungsphase ist die resultierende Induktivität der beiden in Reihe geschalteten Magnetspulen M1 und M2 bei angenommener idealer magnetischer Kopplung theoretisch gleich Null, in der Realität aber durch unvermeidliche, allerdings relativ kleine Streuinduktivitäten bestimmt.

Dies bedeutet, dass unmittelbar nach Schließen des Schalters S 1 der volle, nur durch die Versorgungsspannungsquelle UB und den ohmschen Widerstand Ri der beiden Magnetspulen M1 und M2 bestimmte Stromfluss vorhanden ist. Dies ist ganz wesentlich, weil die Größe der abstoßenden Kraft zwischen den Polschuhen direkt vom Strombelag der Spulen, also dem Produkt aus Strom und Windungszahl, abhängt. Die mit F bezeichneten Richtungspfeile kennzeichnen den tangentialen Kraftanteil und die Bewegungsrichtung des Rotormagneten.

Die Figur 2 zeigt das elektrische Ersatzschaltbild. In der Bewegungsphase 1 des Motors ist die resultierende Induktivität der Anordnung annähernd Null. Ri ist der ohmsche Widerstand der beiden Spulen.

In diesem Zusammenhang wird klar, dass mit der beschriebenen Schaltung bei entsprechend hoher Spannung der Versorgungsspannungsquelle UB auch die Verwendung von Magnetspulen mit sehr großen Windungszahlen sinnvoll sein kann, die ansonsten wegen der viel zu hohen Induktivitäten der Einzelspulen in geschalteten Motoranordnungen nicht verwendbar wären.

Da in der Bewegungsphase 1 die beiden Magnetspulen M1 und M2 über den geschlossenen magnetischen Kreis eng gekoppelt und elektrisch gegensinnig miteinander verbunden sind, kann eine wie auch immer angenommene magnetische Flußänderung in dem Kreis zu keiner resultierenden Spannung an den Motorklemmen führen.

Der erfindungsgemäße elektrische Synchronmotor generiert also keine Gegen-EMK und zeichnet sich daher durch einen hohen Wirkungsgrad aus.

Während sich der Rotor weiter bewegt und die sich direkt gegenüberstehenden Flächen der Polschuhe kontinuierlich abnehmen, nimmt die resultierende Induktivität der beiden Magnetspulen zunächst langsam aber kontinuierlich zu, weil die magnetische Kopplung zwischen den beiden Spulen immer geringer wird, die Gesamt-Induktivität wird zunehmend durch magnetische Streuflüsse bestimmt, die nicht mehr mit beiden Spulen verkoppelt sind. In dem Augenblick, in dem die beiden Polschuh-Paare sich voneinander lösen, steigt die resultierende Induktivität der beiden Magnetspulen sprunghaft an und erreicht sehr rasch einen maximalen Wert, der durch die Reihenschaltung der dann praktisch nicht mehr magnetisch gekoppelten beiden Einzelspulen vorgegeben wird.

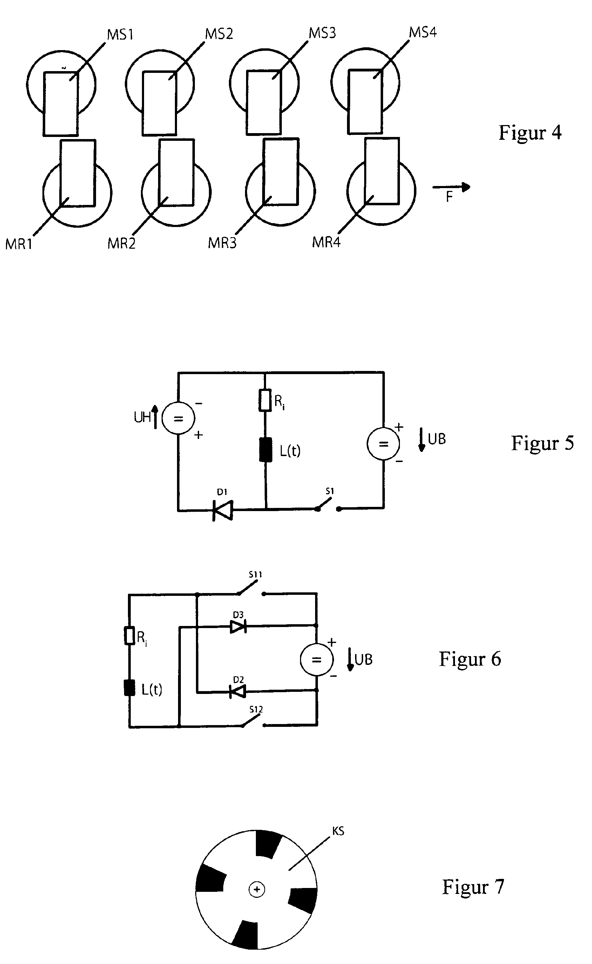

Stark vereinfacht durch die Darstellung in Geraden-Abschnitten zeigt die Figur 3 qualitativ den resultierenden Induktivitätsverlauf als Funktion des Rotorwinkels. Werden zum Beispiel je 4 identische Magnetspulen mit den zugehörigen Polschuhen in gleichem Winkelabstand zueinander im Stator und im Rotor untergebracht, ergibt sich der dargestellte zyklische Induktivitätsverlauf mit 4 Maximalwerten je Rotorumdrehung. Figur 4 stellt diese Magnet-Anordnung mit den Statormagneten MS1 bis MS4 und den Rotormagneten MR1 bis MR4 in abgewickelter Form und in axialer Draufsicht dar. Die Spulen sind alle im vorgeschriebenen Wicklungssinn in Reihe geschaltet, die Stromzuführung zur Gruppe der Rotorspulen erfolgt z. B. in bekannter Form über elektrische Schleifringe.

Sobald die resultierende Induktivität annähernd ihren Maximalwert erreicht hat, ist die Bewegungsphase 1 des Motors beendet, der Schalter S1 aus der Figur 2 wird geöffnet, es erfolgt keine Speisung mehr aus der Versorgungsspannungsquelle UB. In der Figur 3 sind der Ausschaltzeitpunkt von S1 mit t1 und der zugehörige Rotorwinkel mit ϕ1 bezeichnet. Die resultierende Induktivität zum Zeitpunkt t1 wird mit L(t1), der Strom zum Zeitpunkt t1 wird mit I(t1) benannt.

Die Bestromung der Rotor- und Statorelektromagnete kann beispielsweise alternativ auch in einfacher Weise mittels einer auf der Motorachse sitzenden und in der Figur 7 dargestellten Kontaktsteuerscheibe oder -walze KS gesteuert werden, welche den Kontakt zu den Rotor- und Statorelektromagneten entsprechend dem Drehwinkel herstellt.

In der jetzt folgenden Bewegungsphase 2 wird die zum Zeitpunkt t1 in den beiden Induktivitäten gespeicherte Energie E = 1/2 · L(t1) · I(t1)² möglichst vollständig zurück gewonnen, Verluste durch den Innenwiderstand der Spulen oder weitere notwendige Schaltungselemente wie Dioden sind dabei natürlich unvermeidlich.

Im einfachsten Fall kann die Energierückspeisung mit einer Beschaltung erreicht werden, die in der Figur 5 schematisch dargestellt ist. Der hier mit UH bezeichnete Energiespeicher könnte z.B. ein Kondensator oder ein Akkumulator sein, der in der Bewegungsphase 2 des Motors mit dem Energiebetrag E nachgeladen wird. Die Diode D1 trennt den Energiespeicher UH während der aktiven Bewegungsphase 1 von dem Speisestromkreis ab.

Ohne zweiten Energiespeicher kommt eine Schaltungsvariante zur Energierückspeisung aus, bei der der Schalter S1 zweipolig ausgelegt ist und der sowohl die positive wie die negative Spannungszuleitung zum Motor synchron an- bzw. abschaltet. Diese Variante ist in der Figur 6 dargestellt. Durch diese zweipolige Abtrennung während der Bewegungsphase 2 kann der größte Teil der Energie E wieder in die in diesem Beispiel als Akkumulator angenommene Versorgungsspannungsquelle UB zurückfließen. Dabei sind jetzt zwei Dioden D2 und D3 notwendig, um den Rückladestromkreis während der Bewegungsphase 1 von der Versorgungsspannungsquelle UB abzutrennen. Die Dioden D2 und D3 sperren, wenn die Schalter S11 und S12 geschlossen sind.

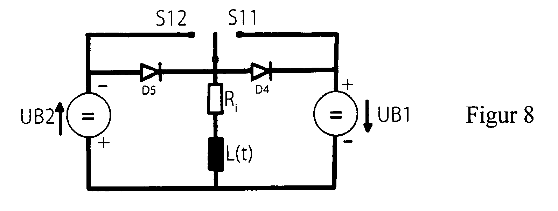

Ein weiteres, verbessertes Ausführungsbeispiel der Erfindung zeigt die Figur 8. Hier sind zwei Spannungsquellen UB1 und UB2 vorhanden, die alternierend die beiden in Serie geschalteten Spulen des Stator- und des Rotorelektromagneten während eines jeweils definierten Zeitintervalls über einen ersten Schalter S11 bzw. einen zweiten Schalter S12 mit Strom versorgen.
Während der Schalter S11 geschlossen ist, fließt Strom in positiver Richtung durch die Spulen.
Wenn der Schalter S11 wieder geöffnet wird, wird die in den Spulen gespeicherte Energie über eine erste Diode D5 in die zweite Spannungsquelle UB2 zurück geladen.
Im zugeordneten Zeitfenster wird danach der Schalter S12 geschlossen, es fließt ein Strom in umgekehrter Richtung durch die Spulen.
Nach Öffnen des Schalters S12 wird die nun in den Spulen gespeicherte Energie über eine zweite Diode D4 in die erste Spannungsquelle UB1 zurück geladen.
Die Schalter S11 bzw. S12 werden in Abhängigkeit von der Rotorposition jeweils nur für kurze Zeit geschlossen, während der Rücklade-Phasen sind jeweils beide Schalter geöffnet.

Die Schaltung nach Figur 8 hat zwei wesentliche Vorteile: Bei der Variante nach Figur 6 ist ein sehr guter Synchronlauf zwischen den Schaltern S11 und S12 notwendig, wenn Verluste während der Rückladung der in den Spulen gespeicherten Energie verhindert werden sollen. Eine solche Synchronisierung entfällt bei der Variante nach Figur 8.

Der zweite Vorteil besteht darin, dass die Stromrichtung in den Spulen und damit die Magnetisierungsrichtung in den Spulenkernen alternieren. Damit wird eine bleibende Magnetisierung der Kerne vermieden, die für den Betrieb des Motors hinderlich wäre.

Der abklingende Strom in den beiden Magnetspulen erzeugt während der Rücklade-Phase kein Gegendrehmoment, da die Stromrichtung in den Spulen gleich bleibt. Das während der Rückladephase generierte positive Drehmoment ist allerdings sehr klein, weil der Abstand der Polschuhe voneinander schon relativ groß ist.

Am Ende der Bewegungsphase 2, das durch den Zeitpunkt t2 und den zugehörigen Rotorwinkel ϕ2 gekennzeichnet ist, ist der Rückladevorgang praktisch vollkommen abgeschlossen, der Strom in den beiden Magnetspulen M1 und M2 ist jetzt annähernd auf den Wert Null abgeklungen.

In der Bewegungsphase 3 schließlich bewegt sich die bisher betrachtete Magnetspule bzw. die Gruppe der Magnetspulen des Rotors stromlos weiter bis sich die Polschuhe des oder der Rotormagnete den Polschuhen der jeweils nächsten benachbarten Statormagnete vollkommen angenähert haben und bis danach die nächste Bestromungsphase erreicht ist.

In den Bewegungsphasen 2 und 3 wird der Rotor also im Wesentlichen durch sein Trägheitsmoment weiterbewegt.

In der bisher dargestellten einfachen Version ist der Motor besonders unter Last nicht sicher selbst anlaufend. Abhilfe kann dadurch geschaffen werden, dass mehrere, z.B. drei oder vier Gruppen von Elektromagneten phasenversetzt am Rotor und im Stator untergebracht werden, so dass unabhängig von der jeweiligen Rotorposition mindestens eine Gruppe sich in der "Bestromungsposition" befindet. Dies führt gleichzeitig zu erheblich verbesserten Rundlaufeigenschaften des Motors.

Das erfindungsgemäße Motorprinzip erfordert eine Einrichtung zur Steuerung der Bestromungszeitpunkte und zur lastunabhängigen Drehzahlregelung. Dem Stand der Technik entsprechend könnte dabei eine optische Codierscheibe oder ein Winkelsensor mit Hallelementen verwendet werden, um den aktuellen Rotorwinkel mit hinreichender Genauigkeit zu detektieren. Die Drehzahl bzw. die Winkelgeschwindigkeit des Rotors kann aus diesem Winkelsensor ebenfalls sehr einfach abgeleitet werden.

Zur Drehzahlregelung wird bevorzugt ein elektronischer PID-Regler mit auf den jeweiligen Motor abgestimmten Parametern vorgeschlagen, über den die Bestromungsdauer in der Bewegungsphase 1 variiert werden kann, indem der Einschaltzeitpunkt t0 den regelungstechnischen Erfordernissen entsprechend dynamisch vor- oder zurückverlegt wird.

Alternativ hierzu kann der elektrische Synchronmotor auch durch dynamische Variation der Spannungsversorgungsquelle UB geregelt werden. Die Bestromungsdauer während der Bewegungsphase 1 kann bei dieser Lösung konstant bleiben.

Nachfolgend wird die Funktion der Erfindung nochmals mit kurzen Worten erläutert. Das Wirkprinzip des synchronen, geschalteten Motors beruht auf der abstoßenden Kraft zwischen den gleichnamigen Polen von Elektromagneten. Die Elektromagnete des Rotors und des-Stators haben die gleichen Windungszahlen und sind elektrisch in Reihe geschaltet. Sie werden nur innerhalb eines von der aktuellen Rotorposition bestimmten Zeitfensters mit der Versorgungsspannungsquelle verbunden. Die Elektromagnete bilden während dieser Bestromungsphase einen geschlossenen magnetischen Kreis, die resultierende Induktivität der Anordnung ist dabei vernachlässigbar klein. Aufgrund der identischen und gegensinning gepolten Windungszahlen der Magnete wird keine Gegen-EMK generiert. Wenn sich die Polschuhe der Magnete anschließend weiter voneinander entfernen, steigt die resultierende Induktivität sprunghaft auf die Summe der Einzelinduktivitäten der Rotor- und Statormagnete an. Zu diesem Zeitpunkt wird die Bestromung der Magnete beendet. Anschließend wird über eine geeignete Schaltungsanordnung die zum Abschaltzeitpunkt in den Spuleninduktivitäten gespeicherte elektrische Energie in die Speisespannungsquelle zurück geladen.

Aus den genannten Gründen wird bei der Erfindung ein sehr hoher Wirkungsgrad erzielt.

Sehr viele konstruktive Varianten des erfindungsgemäßen Motors sind denkbar, solange erreicht werden kann, dass die Windungszahlen in der Rotoranordnung und der Statoranordnung identisch sind und die oben beschriebene zyklische Variation der Induktivität zwischen einem Wert in der Nähe von Null und einem Maximalwert realisierbar ist.

Vorteilhaft sind nach dem erfindungsgemäßen Prinzip auch Linearmotoren herstellbar. Denkbar sind auch spezielle Konstruktionen, bei denen z.B. die Magnetspulen nur Pendelbewegungen oder Hin- und Herbewegungen gegeneinander ausführen.

### Bezugszeichenliste

- KS: Kontaktsteuerscheibe oder -walze
- M1: Elektromagnet 1
- M2: Elektromagnet 2
- P11: Polschuh 1 des Elektromagneten M1
- P21: Polschuh 1 des Elektromagneten M2
- P12: Polschuh 2 des Elektromagneten M1
- P22: Polschuh 2 des Elektromagneten M2
- F: Kraft in Bewegungsrichtung des Rotors
- S1: Schalter zu Anschaltung des Motors an die Versorgungsspannungsquelle UB
- UB: Versorgungsspannungsquelle für den Motor
- Ri: Innenwiderstand der Spulenanordnung
- ϕ: Winkelposition des Rotors
- L(ϕ): Vom Rotorwinkel abhängige Induktivität der Spulenanordnung
- ϕ0: Rotorwinkel, bei dem die Bestromung der Elektromagnete beginnt
- ϕ1: Rotorwinkel, bei dem die Bestromung der Elektromagnete endet
- ϕ2: Rotorwinkel, bei dem die Rückladung abgeschlossen ist
- MS1: Statormagnet 1
- MS2: Statormagnet 2
- MS3: Statormagnet 3
- MS4: Statormagnet 4
- MR1: Rotormagnet 1
- MR2: Rotormagnet 2
- MR3: Rotormagnet 3
- MR4: Rotormagnet 4
- D1: Rückladediode der Variante 1
- UH: Energiespeicher für die Rückladung in Variante 1
- D2: Rückladediode der Variante 2
- D3: Rückladediode der Variante 2
- S11: erster Teil eines doppelpoligen synchronen Schalters
- S12: zweiter Teil eines doppelpoligen synchronen Schalters
- D4: Rückladediode der Variante 3
- D5: Rückladediode der Variante 3

## Patentansprüche

1. Verfahren zum Betrieb eines elektrischen Synchronmotors mit geschalteten Elektromagneten, mit einem Stator, aufgebaut aus mindestens einem Statorelektromagneten (MS1 - MS4), mit einem Rotor, aufgebaut aus mindestens einem Rotorelektromagneten (MR1 - MR4), **dadurch gekennzeichnet, daß** die Windungszahlen der Wicklungen auf den Statorelektromagneten (SM1 -SM4) mindestens annähernd gleich den Windungszahlen der Wicklungen auf den Rotorelektromagneten (RM1 - RM4) gewählt werden, daß aber der auf den durch Rotor und Stator gebildeten magnetischen Kreis bezogene Wicklungssinn der Wicklungen der Statorelektromagnete (SM1 -SM2) entgegengesetzt zum Wicklungssinn der Wicklungen der Rotorelektromagnete (RM1 - RM2) gewählt wird und daß die Stator- und Rotorelektromagnete (SM1 - SM4, RM1 - RM4) in Reihe geschaltet werden.

2. Verfahren nach Anspruch 1, **dadurch gekennzeichnet, daß** die Windungszahlen der Wicklungen auf den Statormagneten (SM1 - SM2) gleich den Windungszahlen der Wicklungen auf den Rotormagneten (RM1 - RM2) gewählt werden.

3. Verfahren nach Anspruch 1 oder 2, **dadurch gekennzeichnet, daß** zur Steuerung des elektrischen Synchronmotors und somit zur Bestromung der in Reihe geschalteten Stator- und Rotorelektromagnete (SM1 - SM4, RM1 - RM4) mindestens ein erster steuerbarer Schalter (S 1) vorgesehen wird.

4. Verfahren nach Anspruch 1 oder 2, **dadurch gekennzeichnet, daß** zur Steuerung des elektrischen Synchronmotors und somit zur Bestromung der in Reihe geschalteten Stator- und Rotorelektromagnete (SM1 - SM4, RM1 - RM4) eine auf der Motorachse sitzende Kontaktsteuerscheibe oder -walze (KS) vorgesehen wird.

5. Verfahren nach Anspruch 1 oder 2, **dadurch gekennzeichnet, daß** zur Steuerung des elektrischen Synchronmotors und somit zur Bestromung der in Reihe geschalteten Stator- und Rotorelektromagnete (SM1 - SM4, RM1 - RM4) eine Versorgungsspannungsquelle (UB) geregelt wird.

6. Verfahren nach Anspruch 1 oder 2, **dadurch gekennzeichnet, daß** zur Steuerung des elektrischen Synchronmotors und somit zur Bestromung der in Reihe geschalteten Stator- und Rotorelektromagnete (SM1 - SM4, RM1 - RM4) der Einschaltzeitpunkt für die Bestromung (t0) geregelt wird.

7. Verfahren nach einem der Ansprüche 1 bis 6, **dadurch gekennzeichnet, daß** ein Energiespeicher (UH) zur Rückspeisung der in den Spulen der Stator- und Rotormagnete (SM1 - SM4, RM1 - RM4) gespeicherten Energie vorgesehen wird.

8. Verfahren nach einem der Ansprüche 1 bis 6, **gekennzeichnet, durch folgende Verfahrensschritte**:
Es werden zwei Spannungsquellen (UB1, UB2) vorgesehen, die alternierend die beiden in Serie geschalteten Spulen des Stator- und des Rotorelektromagneten während eines jeweils definierten Zeitintervalls über einen ersten Schalter (S11) bzw. einen zweiten Schalter (S 12) mit Strom versorgen.
Während der erste Schalter (S 11) geschlossen ist, fließt Strom in positiver Richtung **durch** die Spulen.
Wenn der erste Schalter (S 11) wieder geöffnet wird, wird die in den Spulen gespeicherte Energie über eine erste Diode (D5) in die zweite Spannungsquelle (UB2) zurück geladen.
Im zugeordneten Zeitfenster wird danach der zweite Schalter (S 12) geschlossen, es fließt ein Strom in umgekehrter Richtung **durch** die Spulen.
Nach Öffnen des zweiten Schalters (S 12) wird die nun in den Spulen gespeicherte
Energie über eine zweite Diode (D4) in die erste Spannungsquelle (UB1) zurück geladen.
Die Schalter (S11, S12) werden in Abhängigkeit von der Rotorposition jeweils nur für kurze Zeit geschlossen, während der Rücklade-Phasen sind jeweils beide Schalter (S11, S12) geöffnet.

9. Verfahren nach Anspruch 7, **dadurch gekennzeichnet, daß** ein Kondensator oder Akkumulator als Energiespeicher vorgesehen wird.

10. Verfahren nach Anspruch 7 oder 8, **dadurch gekennzeichnet, daß** der Energiespeicher während der Bestromung der Rotor- und Statorelektromagnete (SM1 - SM4, RM1 - RM4) mittels der Spannungsversorgung (UB) mittels mindestens einer Diode (D1) vom Speisestromkreis abgetrennt wird.

11. Verfahren nach einem der vorangehenden Ansprüche 1 bis 10, **dadurch gekennzeichnet, daß** die Luftspalte zwischen den Rotor- und Statorelektromagneten (RM 1-RM4, SM1 - SM4) möglichst klein gewählt werden.

12. Verfahren nach einem der vorangehenden Ansprüche 1 bis 10, **dadurch gekennzeichnet, daß** der Synchronmotor als Linearmotor oder mit einem die Funktion des Rotors ausführenden Pendel ausgebildet wird.

13. Verfahren nach einem der vorangehenden Ansprüche 1 bis 12, **dadurch gekennzeichnet, daß** mehrere Gruppen von Elektromagneten phasenversetzt am Rotor und im Stator angeordnet werden, so daß unabhängig von der jeweiligen Rotorposition mindestens eine der Gruppen bestromt wird.

14. Elektrischer Synchronmotor mit geschalteten Elektromagneten, mit einem Stator, aufgebaut aus mindestens einem Statorelektromagneten (MS 1 - MS4), mit einem Rotor, aufgebaut aus mindestens einem Rotorelektromagneten (MR1 - MR4), **dadurch gekennzeichnet, daß** die Windungszahlen der Wicklungen auf den Statorelektromagneten (SM1 -SM4) mindestens annähernd gleich den Windungszahlen der Wicklungen auf den Rotorelektromagneten (RM1 - RM4) gewählt sind, daß aber der auf den durch Rotor und Stator gebildeten magnetischen Kreis bezogene Wicklungssinn der Wicklungen der Statorelektromagnete (SM1 -SM2) entgegengesetzt zum Wicklungssinn der Wicklungen der Rotorelektromagnete (RM1 - RM2) gewählt sind und daß die Stator- und Rotorelektromagnete (SM1 - SM4, RM1 - RM4) in Reihe geschaltet sind.

15. Elektrischer Synchronmotor nach Anspruch 14, **dadurch gekennzeichnet, daß** die Windungszahlen der Wicklungen auf den Statormagneten (SM1 - SM2) gleich den Windungszahlen der Wicklungen auf den Rotormagneten (RM1 - RM2) gewählt sind.

16. Elektrischer Synchronmotor nach Anspruch 14 oder 15, **dadurch gekennzeichnet, daß** zur Steuerung des elektrischen Synchronmotors und somit zur Bestromung der in Reihe geschalteten Stator- und Rotorelektromagnete (SM1 - SM4, RM1 - RM4) mindestens ein steuerbarer Schalter (S 1) vorgesehen ist.

17. Elektrischer Synchronmotor nach Anspruch 14 oder 15, **dadurch gekennzeichnet, daß** zur Steuerung des elektrischen Synchronmotors und somit zur Bestromung der in Reihe geschalteten Stator- und Rotorelektromagnete (SM1 - SM4, RM1 - RM4) eine auf der Motorachse sitzende Kontaktsteuerscheibe oder -walze (KS) vorgesehen ist.

18. Elektrischer Synchronmotor nach Anspruch 14 oder 15, **dadurch gekennzeichnet, daß** zur Steuerung des elektrischen Synchronmotors und somit zur Bestromung der in Reihe geschalteten Stator- und Rotorelektromagnete (SM1 - SM4, RM1 - RM4) eine Versorgungsspannungsquelle (UB) regelbar ist.

19. Elektrischer Synchronmotor nach Anspruch 14 oder 15, **dadurch gekennzeichnet, daß** zur Steuerung des elektrischen Synchronmotors und somit zur Bestromung der in Reihe geschalteten Stator- und Rotorelektromagnete (SM1 - SM4, RM1 - RM4) der Einschaltzeitpunkt für die Bestromung (t0) geregelt wird.

20. Elektrischer Synchronmotor nach einem der Ansprüche 14 bis 15, **dadurch gekennzeichnet, daß** ein Energiespeicher (UH) zur Rückspeisung der in den Spulen der Stator- und Rotormagnete (SM1 - SM4, RM1 - RM4) gespeicherten Energie vorgesehen wird.

21. Elektrischer Synchronmotor nach Anspruch 20, **dadurch gekennzeichnet, daß** ein Kondensator oder Akkumulator als Energiespeicher (UH) vorgesehen ist.

22. Elektrischer Synchronmotor nach Anspruch 20 oder 21, **dadurch gekennzeichnet, daß** der Energiespeicher (UH) während der Bestromung der Rotor- und Statorelektromagnete (SM1 - SM4, RM1 - - RM4) mittels einer Versorgungsspannungsquelle (UB) mittels mindestens einer Diode (D1) vom Speisestromkreis abtrennbar ist.

23. Elektrischer Synchronmotor nach einem der Ansprüche 14 bis 22, **dadurch gekennzeichnet, daß**
zwei Spannungsquellen (UB1, UB2) vorgesehen sind, daß alternierend die beiden in Serie geschalteten Spulen des Stator- und des Rotorelektromagneten während eines jeweils definierten Zeitintervalls über einen ersten Schalter (S11) bzw. einen zweiten Schalter (S12) mit Strom versorgbar sind,
daß, während der erste Schalter (S11) geschlossen ist, der Strom in positiver Richtung durch die Spulen fließt, daß, wenn der erste Schalter (S11) wieder geöffnet ist, die in den Spulen gespeicherte Energie über eine erste Diode (D5) in die zweite Spannungsquelle (UB2) zurückladbar ist, daß im zugeordneten Zeitfenster danach der zweite Schalter (S12) geschlossen ist, daß ein Strom in umgekehrter Richtung durch die Spulen fließt, daß nach Öffnen des zweiten Schalters (S 12) die nun in den Spulen gespeicherte Energie über eine zweite Diode (D4) in die erste Spannungsquelle (UB1) zurückladbar ist, daß die Schalter (S11, S12) in Abhängigkeit von der Rotorposition jeweils nur für kurze Zeit geschlossen sind, während der Rücklade-Phasen sind jeweils beide Schalter (S 11, S12) geöffnet.

24. Elektrischer Synchronmotor nach einem der vorangehenden Ansprüche 14 bis 23, **dadurch gekennzeichnet, daß** die Luftspalte zwischen den Rotor- und Statorelektromagneten (RM1 -RM4, SM1 - SM4) möglichst klein gewählt sind.

25. Elektrischer Synchronmotor nach einem der vorangehenden Ansprüche 14 bis 24, **dadurch gekennzeichnet, daß** mehrere Gruppen von Elektromagneten phasenversetzt am Rotor und im Stator angeordnet sind, sodaß unabhängig von der jeweiligen Rotorposition mindestens eine der Gruppen bestromt ist.

26. Elektrischer Synchronmotor nach einem der vorangehenden Ansprüche 14 bis 24 **dadurch gekennzeichnet, daß** der Synchronmotor als Linearmotor oder mit einem die Funktion des Rotors ausführenden Pendel ausgebildet ist.
